# EUROPEAN PATENT APPLICATION

(11) **EP 0 579 379 A1**
(43) Date of publication of application: **19.01.1994**
(21) Application number: 93304585.8
(22) Date of filing: 14.06.1993
(51) Int. Cl.: F16K 11/07

(54) **Fluid seal**

(30) Priority: 16.06.1992 GB 9212715
(71) Applicant: AQUALISA PRODUCTS LIMITED, Westerham, Kent TN16 1DE (GB)
(72) Inventor: Goldsmith, Derek John, Edenbridge, Kent (GB)
(74) Representative: Price, Nigel John King

(57) **Abstract**

A fluid seal for use in sealing between two members. The seal comprises a flexible housing (20) which is provided its internal surface with integral wedge-shaped sealing members (22) to seal against one member (2) and on its external surface, in grooves formed therein, with O-rings (21) to seal against another member (1). The pressure of fluid around the O-rings acts to squeeze the O-rings (21) in their grooves, causing them to deform the housing to press the integral seals (22) into improved sealing contact with the one member (2).

## Description

This invention relates to fluid seals for use in sealing between two members, particularly, but not exclusively, where those two members form part of a fluid valve, and to a valve containing such a fluid seal.

One use for a fluid seal is in a fluid valve comprising a main body and a linearly slidable cartridge contained in the body. In such valves, which may be used for mixing hot and cold water, ports or openings in the body and cartridge are moved into and out of alignment in order to provide for on/off and volume flow control. In such valves it is necessary to seal between the main body and cartridge so that, when the ports and openings are moved out of alignment, flow through the valve can be prevented.

It is known to provide grooves in the surface of one of the main body and cartridge, into which grooves O-rings may be mounted to contact the other of the main body and cartridge and to seal thereagainst. This arrangement has the disadvantage that the grooves are required to be formed in the metal of one of the valve parts and can also present difficulties with assembly of the valve and with wear of the O-rings.

According to a first aspect of the present invention there is provided a fluid seal for use in sealing between two members, comprising a flexible housing provided on a first surface with an integral annular seal to seal, in use, against one of the two members, and an O-ring located in a groove provided in an opposite surface of the housing to seal, in use, against the other of the two members, the O-ring being arranged in its groove such that, in use, the action of high pressure fluid on the O-ring causes the O-ring to deform the housing to bias the integral seal into improved sealing engagement with the one member.

The O-ring may be squeezed, in use, by high pressure fluid against the wall of its groove to deform the housing in a direction generally perpendicular to the direction of the resultant squeezing force. Advantageously, the O-ring is arranged to be squeezed, in use, in a direction generally parallel to the axis of the flexible housing such that the housing is deformed generally radially with respect to the axis.

The integral annular seal may comprise a continuous raised projection having two generally frusto-conical surfaces of opposite conicity meeting at an apex, the apex being arranged to seal, in use, against the one member.

The seal may comprise a plurality of pairs of integral and O-ring seals provided in and on the housing. These pairs of seals may be provided in spaced apart parallel planes with all the integral seals facing in the same general direction. When the flexible housing is generally cylindrical, the integral seals may all be arranged to face radially.

The flexible housing may comprise a plurality of annular rib members connected together by apertured web means, the seals of each pair of integral and O-ring seals being provided on a respective rib member.

According to a second aspect of the present invention there is provided a fluid valve comprising a first member, a second member moveable relative to the first member to regulate fluid flow through the valve, and a fluid seal for sealing between the first and second valve members, the fluid seal comprising a flexible housing provided on a first surface with an integral annular seal in sealing contact with one of said first and second valve members, and an O-ring located in a groove provided in an opposite surface of the housing and in sealing contact with the other of said first and second valve members, the O-ring being arranged in its groove such that, in use, the action of high pressure fluid on the O-ring causes the O-ring to deform the housing to bias the integral seal into improved sealing contact with said one valve member.

The fluid seal may be as described above in relation to the first aspect of the present invention.

The fluid seal may comprise a plurality of pairs of integral and O-ring seals provided in and on housing. The second valve member may be received in the first valve member, with the flexible housing of the fluid seal positioned therebetween and with all the integral seals facing inwardly to sealably contact the second valve member.

The flexible housing of the fluid seal is preferably generally cylindrical with the second valve member being arranged to slide or rotate relative to the first valve member along or around the longitudinal axis of the cylindrical housing. The second valve member is preferably arranged to move relative to both the fluid seal and the first valve member.

Embodiments of the invention will now be described, by way of example, with reference to the accompanying drawings in which:-
Figure 1 is a longitudinal cross-sectional view of a thermo-responsive mixer valve incorporating a first embodiment of fluid seal according to the present invention;
Figure 2 is a longitudinal cross-sectional view of the fluid seal of Figure 1, shown removed from the valve;
Figure 3 is an enlarged detail view of portion A of Figure 2;
Figure 4 is a side elevation of an alternative embodiment of fluid seal, with O-rings removed;
Figure 5 is a section along the line X - X of Figure 4; and
Figure 6 is a side elevation of a yet further alternative embodiment of fluid seal.

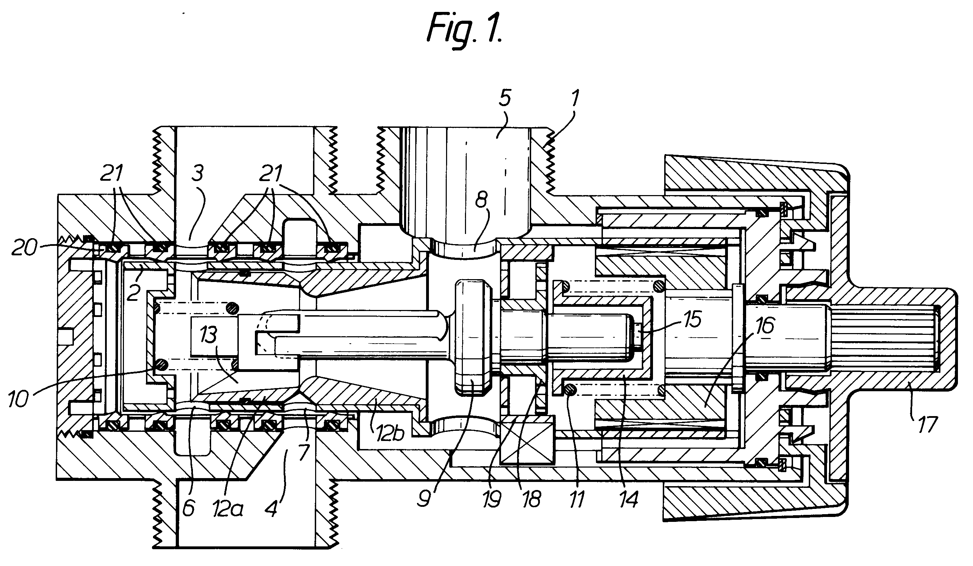

The valve comprises a valve body 1 which slidably receives a cartridge 2. In Fig. 1, the valve is a mixer valve. Accordingly, the valve body 1 has two inlet ports 3, 4 for hot and cold water and an outlet port 5. The cartridge 2 similarly has two inlet openings 6, 7 and an outlet 8.

Within the cartridge 2 there is provided a temperature responsive element 9, in this case a so-called wax-stat element, mounted between oppositely acting compression springs 10, 11. A flow proportioning element 12a for controlling the relative flows of hot and cold fluid through the inlet openings 6, 7 is connected to the end of the wax-stat 9 by radial member 13.

The spring 11 engages the lip of cup-shaped element 14 which itself engages a plunger 15 projecting from the right-hand end of the wax-stat 9. The right-hand end of the spring 11 engages a member 16 whose position may be adjusted axially via control knob 17 to compress spring 11 to move the wax-stat 9 to the left (as drawn in Figure 1).

Secured to the wax-stat 9 is a fluid damping means comprising a piston 18 arranged to reciprocate within a cylinder 19, such movement being resisted by movement of fluid from one side of the piston to the other through restricted orifices in the piston.

Sealing between the valve body 1 and the cartridge 2 is provided by a seal in the form of a flexible annular housing 20 provided in an annular gap between the valve body 1 and the cartridge 2. The illustrated housing 20 is a generally cylindrical structure provided with apertures for the flow therethrough of fluid. The external surface of the housing 20 is provided with seals in the form of a plurality of sealing rings or O-rings 21, each received in an annular groove in the external surface. In use, as shown in Figure 1, the O-rings 21 are radially compressed by the internal cylindrical surface of the valve body 1 and seal thereagainst.

The internal surface of the sealing housing 20 is provided with integral annular seals or sealing members 22. These integral sealing members, which take the form of continuous raised projections 22, are generally aligned with the O-rings 21 provided on the external surface of the housing 20. In the illustrated embodiment, the raised projections are formed by two frusto-conical surfaces of opposite conicity, meeting at an apex, and it is this apex which, in use, seals against the external generally cylindrical surface of the slidable cartridge 2. To aid the sealing action, the external surface of the slidable cartridge 2 is preferably provided with a smooth finish, for example it may be chrome plated.

As shown, it is the O-ring seals 21 which seal against the stationary member and the integral seals which seal against the relatively moveable member. This is the preferred arrangement due to the integral seals being better suited to sealing against a movable member and being less susceptible to being damaged by the edges of the cartridge inlet openings 6, 7 as they slide past the seals. Ideally, the edges of the cartridge inlet openings 6, 7 are rounded to avoid the presence of sharp edges which could damage the seals 21. Rounded edges may, for example, be formed by chemical etching or piercing the holes 6, 7 using a suitably designed punch.

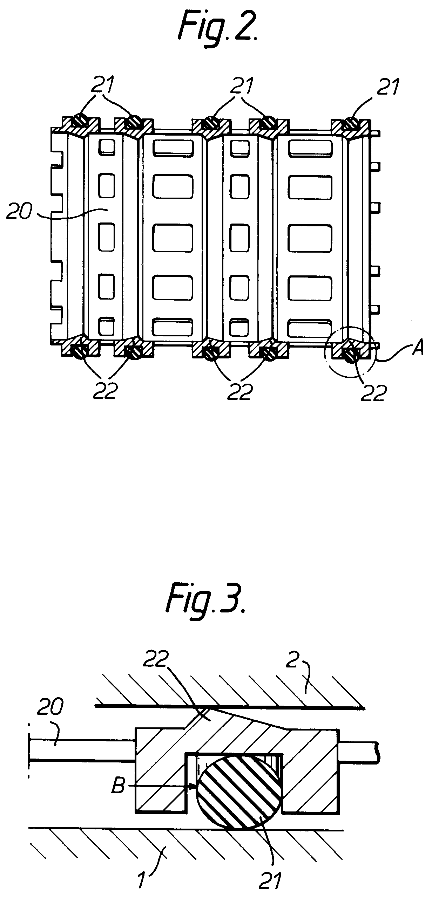

As best seen in Figure 2 the apertured, generally cylindrical structure member of housing 20 comprises a plurality of annular ribs, each provided on its radially inwardly and outwardly facing surface with an integral sealing member 22 and a groove receiving an O-ring 21 respectively, the ribs being joined together by thin apertured webs.

In use, the high pressure of the incoming fluid acts to squeeze the O-rings 21 in the axial direction of sliding of the cartridge 2 (see arrow B in Figure 3), so squashing each O-ring against one side of its groove in the manner shown in Figure 3. This squeezing causes the O-ring to try and increase its radial dimension. Insofar as the valve body 1 is of substantial construction, relative to the flexible nature of the housing 20, the effect of this radial expansion of the O-ring is to apply pressure to the structural member of the housing, by trying to deflect it radially inwardly in the region of the O-rings, to urge the generally aligned integral member 22 on the internal surface of the sealing housing into improved sealing contact with the external surface of the cartridge 2.

The housing 2 may advantageously be made, by moulding, in an elastomeric P.T.F.E.-filled polymer, to give it the required flexibility such that pressure applied to it, in use, by the O-ring 21 will be transmitted therethrough to the interface of the integral sealing member 22 and cartridge 2.

In use, the cartridge 2 is axially moveable within the valve body 1 to provide on/off action and to vary the flow through the valve. As shown in Figure 1, the valve is in its open position. This provides the minimum impediment to flow from the valve body inlet ports 3, 4 to the cartridge inlet openings 6, 7. When the cartridge is pushed to the left, it will slide relative to the valve body 1 and housing 20 until the openings 6, 7 are out of alignment with ports 3, 4. If the cartridge is pushed fully to the left, the integral sealing members 22 isolate the valve body inlet ports 3, 4 from the cartridge inlet openings 6, 7, so cutting the flow of fluid through the valve. The rightmost illustrated pair of integral sealing members and O-rings prevent leakage of cold fluid from fluid valve inlet port 4 direct to valve outlet port 5.

The extent of the leftward movement of the cartridge 2 determines the proportion of volume of flow allowed from the valve body inlet ports 3, 4 to the cartridge inlet openings 6, 7.

As mentioned above, axial movement of the member 16 controls the spring force exerted by the spring 11 against the cup 14 which bears against the plunger 15 of the wax-stat. In Figure 1, the valve is positioned with the cold fluid fully switched off and the maximum flow of hot fluid permitted. The position shown in the drawing with the movable flow proportioning element 12a abutting against the stationary element 12b is not one that will normally be achieved in practice. In normal operation, the wax-stat 9 will float between the two springs 10, 11. In this condition, leftward movement of the member 16 will increase the pressure of spring 11, urging the wax-stat 9 to the left such that the movable flow proportioning element 12a will itself tend to move to the left to restrict flow through the cartridge inlet opening 6 and to reduce the obstruction to the other cartridge inlet opening 7, with the consequence that there will be a reduction of the flow of hot fluid and an increase in the flow of cold fluid to reduce the temperature of the outlet mixture. The damping piston 18 will damp such initial movement under the influence of spring pressures, so as to reduce the tendency for a surge of too cold fluid to be passed before the wax-stat has a chance to adjust for the required outlet temperature.

In the embodiment of Figures 1-3, the housing 20 is fixed relative to the valve body 1, with the cartridge 2 being movable relative to both the housing and the valve body. Furthermore, the O-ring seals 21 seal against the valve body and the integral seals 22 seal against the cartridge. In an alternative (non-illustrated) arrangement the housing 20 may be fixed relative to the cartridge 2 and be movable with the cartridge relative to the housing 20. In this case, the housing 20 is advantageously modified from that illustrated in Figures 1-3, so as to have the O-ring seals 21 facing radially inwardly, to contact the cartridge 2, and the integral seals 22 facing radially outwardly and in sliding engagement with the valve body 1.

Although the fluid seal of Figures 1-3 is shown fitted in a thermo-responsive mixing valve, the fluid seal is applicable to non-mixing valves and to valves that are not thermo-responsive. Furthermore, although the seal is particularly suited to sealing between two components of a valve, it is applicable to sealing between members that are not valve components.

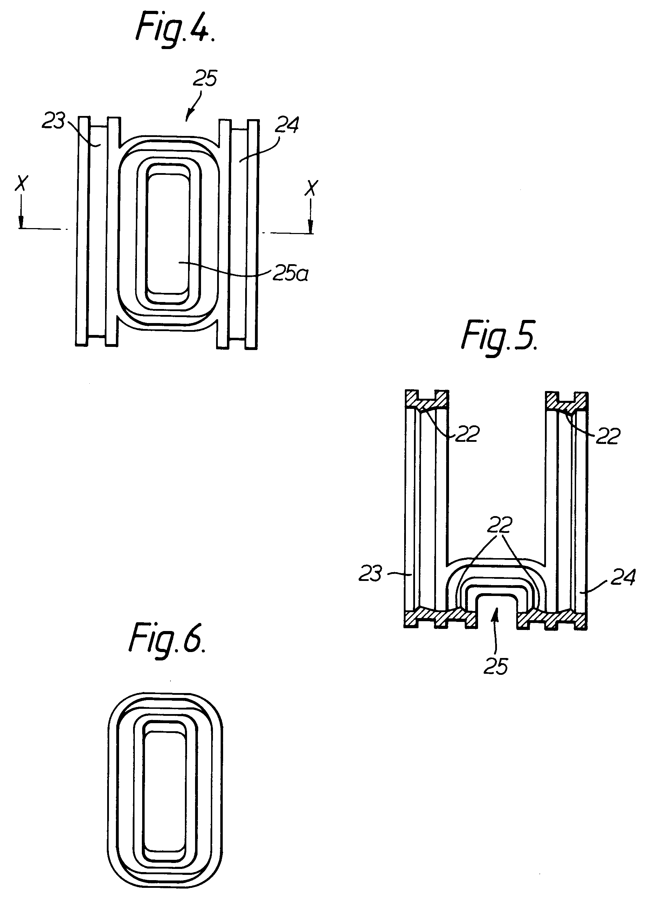

In the embodiment illustrated in Figures 1-3, the additional sealing members 21 and O-rings 22 are all arranged in spaced apart parallel planes. Depending on the construction of the valve body inlet ports 3, 4 and the cartridge inlet openings 6, 7 other arrangements of the additional and integral sealing members may be suitable. For example, in Figures 4 and 5 there is illustrated an alternative construction of seal. Although not suitable for use with the particular embodiment of valve illustrated in Figures 1-3 due to the arrangement of the inlet ports and inlet openings, Figures 4-5 show that, in addition to two pairs of O-ring and integral seals provided in spaced apart parallel planes at 23 and 24, a third set of seals may be provided therebetween at 25. The saddle-shaped annular seals at 25 may be used where the area of the port(s) or opening(s) to be sealed thereby can be contained within the internal area 25a delimited by the seals. It will therefore be appreciated that the fluid seal is not limited to the provision of O-ring and integral seals in spaced apart parallel planes as in the Figures 1-3 embodiment.

Figure 6 illustrates a saddle-shaped fluid seal in isolation. From this it will be appreciated that the flexible housing need not be annular.

## Claims

1. A fluid seal for use in sealing between two members, comprising a flexible housing (20) provided on a first surface with an integral annular seal (22) to seal, in use, against one of the two members, and an O-ring (21) located in a groove provided in an opposite surface of the housing to seal, in use, against the other of the two members, the O-ring being arranged in its groove such that, in use, the action of high pressure fluid on the O-ring causes the O-ring to deform the housing to bias the integral seal into improved sealing engagement with the one member.

2. A fluid seal as claimed in claim 1, wherein the integral annular seal (22) is provided on the first surface of the housing in general alignment with the groove.

3. A fluid seal as claimed in claim 1 or claim 2, wherein the O-ring (21) is arranged to be squeezed, in use, by high pressure fluid against a wall of its groove to deform the housing (20) in a direction generally perpendicular to the direction of the resultant squeezing force.

4. A fluid seal as claimed in any of the preceding claims, wherein the integral annular seal (22) comprises a continuous raised projection.

5. A fluid seal as claimed in claim 4, wherein the continuous raised projection (22) comprises two generally frusto-conical surfaces of opposite conicity meeting at an apex, the apex being arranged to seal, in use, against the one member.

6. A fluid seal as claimed in any of the preceding claims, comprising a plurality of pairs of integral and O-ring seals (21, 22) provided in and on the housing (20).

7. A fluid seal as claimed in claim 6, wherein the pairs of integral and O-ring seals (21, 22) are provided in spaced apart parallel planes.

8. A fluid seal as claimed in claim 6 or claim 7, wherein all the integral annular seals (22) are arranged to face in the same general direction.

9. A fluid seal as claimed in any of claims 6 to 8, wherein the flexible housing (20) comprises a plurality of annular rib members connected together by apertured web means, the seals of each pair of integral and O-ring seals (21, 22) being provided on a respective rib member.

10. A fluid seal as claimed in any of claims 6 to 9, wherein the flexible housing (20) is generally cylindrical and the integral annular seals (22) face generally radially.

11. A fluid seal as claimed in claim 10, wherein the O-rings (21) are arranged to be squeezed, in use, in a direction generally parallel to a cylindrical axis of the generally cylindrical flexible housing (20) to deform the housing generally radially with respect to said axis.

12. A fluid valve comprising a first member (1), a second member (2) moveable relative to the first member to regulate fluid flow through the valve and a fluid seal (20, 21, 22) as claimed in any of the preceding claims, wherein the or each integral annular seal (22) is in sealing contact with one of said first and second valve members and the or each O-ring (21) is in sealing contact with the other of said first and second valve members.

13. A fluid valve as claimed in claim 12, wherein the second valve member (2) is received in the first valve member (1), and the flexible housing (20) of the fluid seal is positioned therebetween.

14. A fluid valve as claimed in claim 13, wherein the flexible housing (20) is generally cylindrical and the second valve member (2) is arranged to slide and/or rotate relative to the first valve member (1) along or around a longitudinal axis of the flexible housing.

15. A fluid valve as claimed in claim 14, wherein the second valve member (2) is moveable relative to both the fluid seal (20, 21, 22) and the first valve member (1) and the fluid seal (22) is arranged with the or each integral seal in sealing contact with the second valve member (2).

16. A fluid valve as claimed in claim 14, wherein the second valve member (2) is movable with the fluid seal (20, 21, 22) relative to the first valve member (1) and the fluid seal is arranged with the or each integral seal (22) in sealing contact with the first valve member (1).
